# EUROPÄISCHE PATENTSCHRIFT

(11) **EP 0 564 483 B1**
(45) Veröffentlichungstag und Bekanntmachung des Hinweises auf die Patenterteilung: **24.01.1996**
(21) Anmeldenummer: 92900400.0
(22) Anmeldetag: 06.12.1991
(51) Int. Cl.: C09J 175/16

(54) **NEUE REAKTIVKONTAKTKLEBER, VERFAHREN ZU IHRER HERSTELLUNG UND IHRE VERWENDUNG**
NOVEL REACTIVE CONTACT ADHESIVE, PROCESS FOR PRODUCING IT AND ITS USE
NOUVELLES COLLES DE CONTACT REACTIVES, PROCEDE DE PREPARATION ET APPLICATIONS

(30) Priorität: 24.12.1990 DE 4041753
(43) Veröffentlichungstag der Anmeldung: 13.10.1993
(73) Patentinhaber: Henkel Kommanditgesellschaft auf Aktien, D-40191 Düsseldorf (DE)
(72) Erfinder: HUVER, Thomas, D-4000 Düsseldorf 13 (DE); EMMERLING, Winfried, D-4040 Neuss 21 (DE); KUX, Michael, D-4019 Monheim (DE); NICOLAISEN, Christian, D-3003 Ronnenberg 1 (DE); KLAUCK, Wolfgang, D-4005 Meerbusch 2 (DE)
(86) Internationale Anmeldenummer: EP9102339
(87) Internationale Veröffentlichungsnummer: WO9211335

(56) Entgegenhaltungen:
- EP-A- 0 108 630
- US-A- 4 174 307
- US-A- 4 818 804
- US-A- 4 822 829

## Beschreibung

Die Erfindung betrifft neue Kontaktklebstoffe, die als multifunktionelle Kontakt-Reaktivkleber ausgebildet sind und im Rahmen eines mehrstufigen Aushärtungsverfahrens beispielsweise zum Verkleben von Holz, Kunststofformteilen, Metallen und dergl. eingesetzt werden können. Die Erfindung umfaßt weiterhin das Verfahren zur Herstellung der neuen Reaktiv-Kontaktkleber. Die Erfindung beschreibt dabei für den angegebenen Einsatzzweck insbesondere eine Stoffklasse von bifunktionell substituierten Urethan-Oligomeren. Der eine dieser funktionellen Substituenten kennzeichnet sich durch das Vorliegen einer olefinischen Doppelbindung, die einer radikalischen Reaktionsauslösung zugänglich ist. Der andere funktionelle Substituent ist eine Isocyanatgruppierung, die beispielsweise durch Feuchtigkeitseinwirkung der Abreaktion unterliegt. Diese unterschiedlichen Reaktionsmechanismen machen - insbesondere bei unterschiedlichen Reaktionsgeschwindigkeiten - die stufenweise Aushärtung des Reaktiv-Kontaktklebers möglich, wodurch die im Nachfolgenden ausführlich geschilderte Möglichkeit eröffnet wird, in einer ersten Arbeitsstufe kontaktsensitive Kleberschichten auf harten Werkstoffflächen auszubilden, die entsprechend ausgerüsteten Werkstoffflächen dann zu fügen und in der abschließenden Arbeitsstufe des zweiten Härtungsschrittes, insbesondere unter dem Einfluß der Luftfeuchtigkeit, die festhaftende Verbindung der gefügten Werkstoffteile miteinander zu schaffen.

Zweistufig aushärftente Beschichtungsstoffe auf Urethanbasis sind in verschiedenen Ausführungsformen vorbeschrieben vgl. hierzu beispielsweise S.Peeters et al. "OVERVIEW OF DUAL CURE POSSIBILITIES IN UV COATINGS" POLYMERS PAINT COLOUR JOURNAL 179 (1989) 304 - 309.

Beschrieben sind hier insbesondere zweistufig härtbare Beschichtungsmassen auf Urethanbasis, die durch einen Gehalt an UV-härtbaren Acrylatgruppen im Rahmen einer ersten Härtungsstufe zu einem verfestigten jedoch noch strukturgebend verformbaren bzw. prägbaren Material ausgehärtet werden können, worauf in einer nachfolgenden zweiten Stufe die irreversible Verfestigung erfolgt. Bei der Verarbeitung dieser mehrfunktionellen Einsatzmaterialien kann insbesondere die Tatsache ausgenutzt werden, daß die Aushärtung der reaktiven Acrylatgruppen beispielsweise durch UV-Strahlung rasch abläüft, während andere im System vorhandene und durch thermische Einwirkung und/oder Feuchtigkeit reaktive Gruppen vergleichsweise langsamer ausgehärtet werden können. Im einzelnen beschreibt die zitierte Literaturstelle nach verschiedenen Mechanismen zweistufig, härtende Systeme für die Anwendung in der Druck- und Beschichtungsindustrie. Angaben zu Klebstoffen, insbesondere zu stufenweise reaktionsfähigen Kontaktklebern im Sinne der erfindungsgemäßen Lehre sind hier nicht gegeben.

Gleiches gilt auch für die Veröffentlichung von S. Peeters et al., Polymers Paint Colour Journal, 179, 304 bis 309, 1989. Darin wird ein zweistufig aushärtbares mehrfunktionelles Polyurethanprepolymer mit freier Acrylat- und Isocyanat-Gruppe beschrieben. Es härtet in Gegenwart von Polyolen oder von Feuchtigkeit sowie unter Einfluß von UV-Licht zweistufig aus. Das Prepolymere wird zur Beschichtung verwendet.

Die EP B1 194 360 beschreibt Bindemittel auf der Basis von Epoxidharzen, die durch Strahlung vernetzt und anschließend durch thermische Behandlung gehärtet werden können. Beschrieben werden im einzelnen entsprechende Bindemittel, die erhalten werden durch Umsetzung einer Epoxidverbindung mit mehr als einer Epoxidgruppe pro Molekül mit einer oder mehreren Carbonsäuren im molaren Verhältnis der Epoxidgruppen zu den Carboxylgruppen von 1 : 0,5 - 0,9 und anschließender Umsetzung des Reaktionsproduktes mit einer oder mehreren ungesättigten Isocyanatocarbamatestern, die durch Umsetzung von Verbindungen mit mindestens zwei Isocyanatgruppen mit hydroxylgruppenhaltigen Acryl-, Methacryloder Cyanacrylestern hergestellt werden. Diese UV-vorvernetzbaren und thermisch nachhhärtbaren Bindemittelsysteme sollen beispielsweise als Ätzresiste und/oder Lötstoplacke Verwendung finden.

Die EP B1, 108 630 beschreibt strahlungshärtbare flüssige Kleberzusammensetzungen zur Herstellung von klaren Glaslaminaten, enthaltend (a) eine Urethan-Acrylat-Komponente in (b) einer flüssigen alpha, beta-ethylenisch ungesättigten Verdünnerkomponente, die Acrylsäure und einen Monoester von Acrylsäure umfaßt, wobei die Zusammensetzung ggfs. auch (c) einen Photoinitiator enthält. Das Kennzeichen dieser Lehre liegt in dem Einsatz solcher Urethan-Acrylat-Komponenten, die erhältlich sind durch Umsetzung eines oligomeren Urethanzwischenproduktes mit Hydroxyl- oder Isocyanat- Endgruppen mit einer alpha, beta-ethylenisch ungesättigten Verbindung, die mit den genannten Endgruppen des Zwischenproduktes reaktiv ist. Liegen als bindungsvermittelnde Endgruppen im Zwischenprodukt Isocyanatgruppen vor, so werden diese zur Herstellung der Urethan-Acrylat-Komponenten zur Abreaktion gebracht und damit dem nachfolgenden Härtungsprozeß als reaktive Gruppe entzogen.

Den vergleichbaren Reaktionsmechanismus der Anbindung von radikalisch härtbaren Acrylatgruppierungen an ein Grundmolekül über intermediär vorliegende freie Isocyanatgruppen an diesem Grundmolekül beschreibt die US-PS 4,174 307. Auch hier werden mehrfunktionell mit Isocyanatgruppen substituierte Ausgangskomponenten mit solchen Acrylatverbindungen umgesetzt, die neben Ihrer radikalisch reaktiven olefinischen Doppelbindung ein reaktionsbereites Wasserstoffatom (bestimmt nach der bekannten Zerewitinoff-Methode) aufweisen, das zur Addition dieser Acrylat-Komponente an die freie Isocyanatgruppe führt. Aktive Wasserstoffatome dieser Art werden insbesondere durch Hydroxylgruppen an Acrylatmonomeren zur Verfügung gestellt, aber auch andere H-aktive Substituenten wie Mercapto-, Imino-, Amino-, Carboxyl-, Carbamoyl-, Sulfo-, Sulfonamido-, Thiocarbamoyl- und ahnliche Gruppierungen sind als potentiell Isocyanat-reaktive Gruppen zur Anbindung der Acrylatreste geeignet. Nach der Lehre dieser Druckschrift sollen die im Zwischenprodukt insgesamt vorliegenden Isocyanatgruppen vollständig mit den reaktiven Acrylatverbindungen umgesetzt werden, so daß polyfunktionelle Acrylat-Urethan-Oligomere ohne Gehalt an freien Isocyanatgruppen resultieren. Für die polyfunktionellen Komponenten dieser Art werden verschiedenartigste Einsatzzwecke einschließlich der Verwendung als Klebstoffe vorgeschlagen.

Die US-PS 4,820.745 beschreibt schließlich drucksensitive, von Lösungsmitteln und anderen flüchtigen Antellen wie ungesättigten Monomeren freie Haftkleber auf Basis ausgewählter Polyester, deren freie Hydroxylgruppen anteilsweise mit Acrylat- bzw. Methacrylatverbindungen abreagiert sind. Zu dieser Anbindung der Acrylat- bzw. Methacrylatreste können auch hier u. a. als reaktive Zwischenglieder freie Isocyanatgruppen eingesetzt werden, die dann aber im Rahmen der Anbindung der reaktionsfähige Acrylatgruppierungen enthaltenden Molekülbestandteile vernichtet werden. Wie bereits angegeben sind darüber hinaus Gegenstand dieser Druckschrift permanent drucksensitive Haftkleber, nicht aber reaktive Kontaktkleber im Sinne der nachfolgenden erfindungsgemäßen Lehre.

### Die wesentlichen Elemente der Erfindung

Gegenstand der Erfindung sind in einer ersten Ausführungsform reaktive Kontaktkleber auf Basis stufenweise nach unterschiedlichen Reaktionsmechanismen härtbarer mehrfunktioneller Makro-Monomerverbindungen - im nachfolgenden als "mehrfunktionelle Makromere" bezeichnet -, die substituierte Urethan-Oligomerverbindungen enthalten, die neben olefinisch ungesättigten radikalisch reaktiven Substituenten feuchtigkeitshärtende Isocyanatgruppen aufweisen. Die erfindungsgemäßen Reaktivkontaktkleber sind durch die zusätzliche Anwesenheit eines radikalisch härtbaren Reaktiv-Verdünners und einer feuchtigkeitsreaktiven Isocyanatverbindung mit Weichmacher-und/oder Vernetzer-Funktion gekennzeichnet.

Die Erfindung betrifft in einer weiteren Ausführungsform das Verfahren zur Herstellung der neuen mehrstufig härtbaren Kontaktkleber-Stoffmischungen. Schließlich betrifft die Erfindung in einer weiteren Ausführungsform die Verwendung dieser Kontaktkleber für das insbesondere flächenmäßige Verkleben von Feststoffoberflächen von beispielsweise Holz, Kunststoffen und/oder Metall.

### Einzelheiten zur erfindungsgemäßen Lehre

Die Lehre der Erfindung geht für die Anwendung der neuen Kontaktkleber von der folgenden Verarbeitungskonzeption aus: Die zu fügenden Formteile sollen mit den bei Verarbeitungstemperatur fließfähigen oder pastös verstreichbaren Kontaktklebern in vorbestimmbarer Schichtdicke beschichtet werden, wobei hier materialsparende vergleichsweise dünne Kleberschichten bevorzugt sein können. Anschließend sollen diese Kleberschichten mittels radikalischer Reaktionsauslösung und dabei insbesondere durch Einwirkung von UV-Strahlung einer ersten Härtungsstufe unterworfen werden. Das jetzt auf der Oberfläche des Formteils gehärtete und damit fixierte Klebermaterial soll zwei für die weitere Werkstoffverarbeitung wesentliche Eigenschaften erfüllen. Einerseits wird eine so hinreichende Kontaktklebrigkeit beim Fugen derart überzogener Werkstoffschichten gegeneinander gefordert, daß alleine durch Druckanwendung die für die praktische Welterverarbeitung hinreichende Haftfestigkeit erzielt werden kann. Zum anderen soll aber diese Kleberschicht zusätzlich Feuchtigkeits-reaktiv sein, sodaß insbesondere unter der Einwirkung der Luftfeuchte im gefügten, beispielsweise zweilagigen Formteil, die beiden miteinander in Berührung stehenden Kleberschichten durch chemische Reaktion miteinander zur dreidimensional vernetzten Kleberschicht aushärten.

Für die Verwirklichung, dieser Konzeption kommt drei Hauptkomponenten des Kontaktklebergemisches besondere Bedeutung zu, den mehrfunktionellen Makromeren, den bevorzugt radikalisch härtbaren Reaktiv-Verdünnern und im Gemisch zusätzlich vorliegenden feuchtigkeitsreaktiven Isocyanatverbindungen mit Weichmacher- und/oder Vernetzerfunktion. Im einzelnen gilt hierzu :

### Die mehrfunktionllen Makromere

Wie bereits angegeben liegt ihr Kennzeichen darin, daß sie neben olefinisch ungesättigten radikalisch reaktiven Substituenten feuchtigkeitshärtende Isocyanatgruppen an einer Urethan-Oligomer-Grundkomponente aufweisen. Bevorzungt gehen diese mehrfunktionellen Makromere von Urethan-Oligomeren mit wenigstens überwiegend linearer Grundstruktur aus. Als funktionnel Gruppierungen enthalten sie einerseits die insbesondere UV-strahlenhärtbaren olefinisch ungesattigten Substituenten und daneben freie Isocyanatfunktionen als den anderen reaktiven Substituenten. In der bevorzugten Ausführungsform sind dabei diese zwei reaktiven Substituententypen im Molekülaufbau wenigstens anteilsweise und insbesondere überwiegend räumlich von einander getrennt am Urethan - Oligomeren angeordnet.

Es ist weiterhin bevorzugt, daß der wenigstens überwiegende Anteil der multifunktionellen Makromer-Verbindungen pro Moleküleinheit jeweils nur einfach mit dem radikalisch reaktiven olefinisch ungesättigten Substituenten funktionalisiert ist, sodaß im Rahmen der ersten Härtungsstufe die Ausbildung linearer Reaktionsketten unter Bildung sogenannter Kammpolymere nicht aber eine dreidimensionale Vernetzung gefördert wird.

In der Regel wird auch ein nicht unbeträchtlicher Anteil der mehrfunktionellen Makromere nur eine Isocyanatgruppe im jeweils betroffenen Molekül aufweisen.Aufgrund der in der zweiten Reaktionsstufe angestrebten Vernetzung der Klebstoffuge leuchtet jedoch ein, daß bezüglich dieser Reaktivgruppe durchaus auch wenigstens anteilsmäßig mehr als nur eine Isocyanatgruppe am hier beschriebenen Mischungsbestandteil der Kontaktkleber vorliegen kann.

In einer bevorzugten Ausführungsform der Erfindung sind in den mehrfunktionellen Makromeren die belden Reaktivgruppen des olefinisch reaktiven Substituenten und der Isocyanatgruppe in Alpha, Omega-Stellung am Urethan-Oligomer-Molekül vorgesehen. In einfacher Weise wird diese räumliche Trennung bei der Herstellung der mehrfunktionellen Makromeren erreicht. Sie leiten sich in dieser Ausführungsform zu einem wenigstens substantiellen Anteil von intermediär gebildeten Isocyanat-terminierten Urethan-Oligomeren und dabei insbesondere von bifunktionellen Komponenten, d.h. Diolen und Dilsocyananten ab. Als intermediäres Reaktionsprodukt entsteht damit ein endständig mit jeweils einer Isocyanatgruppe versehenes Urethan-Oligomeres. Die eine dieser Isocyanatgruppen wird in an sich bekannter Weise - beispielsweise gemäss den eingangs zitierten Angaben der einschlägigen Literatur - mittels einer reaktiven Wasserstoff enthaltenden radikalisch polymerisierbaren Monometverbindung umgesetzt, sodaß in dem jetzt vorliegenden Molekül neben der einen erhaltenen gebliebenen endständigen Isocyanatgruppe am anderen Molekülende die radikalisch reaktive olefinische Gruppierung vorliegt.

Es hat sich gezeigt, daß für die Einstellung der bei der Verarbeitung intermediär geforderten Kontaktklebrigkeit Natur und Menge der die Oligo-Urethane bildenden Grundbestandteile wesentlich sein kann. So werden erfindungsgemäß mekrfunktionelle Makromere des geschilderten Aufbaus bevorzugt, bei denen der Urethan-Oligomer-Grundkörper Molverhältnisse von Diol : Diisocyanat im Bereich von 1 : 1,2 - 2 und vorzugsweise im Bereich von 1 : 1,4 - 1,8 aufweisen. Polyurethan-Oligomere, die für dieses Diol : Diisocyanat-Verhältnis statistische Mittelwerte im Bereich von etwa 1 : 1,5 besitzen, können zur Einstellung der komplexen Produktanforderungen besonders geeignet sein. Gleichzeitig hat sich herausgestellt, daß auch bezüglich der maximalen Molgewichte für diese Urethan-Oligomer-Grundkörper bevorzugte Obergrenzen bestehen. In der Regel werden für diese Komponenten Molgewichte von etwa 35.000 und vorzugsweise von höchstens etwa 20.000 nicht überschritten werden. Besonders geeignete mehrfunktionelle Makromere können auf Basis solcher Urethan-Oligomere erhalten werden, deren Molgewicht im Bereich von etwa 1.000 bis 3.000 liegt.

Zur Herstellung solcher oligomeren Urethan-Vorprodukte werden neben den üblichen aromatischen, aliphatischen und/oder cycloaliphatischen Polyisocyanaten, insesondere entsprechenden Diisocyanaten, in der bevorzugten Ausführungsform Polyole - hier wiederum insbesondere Diole - ausgewählter Molekulargewichts-Bereiche verwendet. So sind beispielsweise kurzkettige Polyester-Diole und/oder entsprechende Polyether-Diole mit maximalen Molgewichten von etwa 6.000 und vorzugsweise von maximal etwa 1.000 besonders geeignete Reaktionspartner für die Herstellung der Urethan-Oligomeren. In der Regel liegt das Mindestmolgewicht der einzusetzenden Diol-Komponenten bei wenigstens etwa 100, wobei sich der Einsatz von Diol-Komponenten mit Molgewichten im Bereich von etwa 230 bis 700 als besonders zweckmäßig erwiesen hat. Gerade durch die Auswahl der Diol-Komponente kann im Rahmen der erfindungsgemäßen Lehre wesentlicher Einfluß auf die Stoffeigenschaften in den verschiedenen Stufen der Verarbeitung und Anwendung der Kontaktklebstoffe genommen werden.

Beispiele für geeignete organische Diisocyanate zur Herstellung der Urethan-Oligomeren aus den besonders geeigneten Klassen der aromatischen, aliphatischen und/oder cycloaliphatischen Diisocyanate sind insbesondere handelsübliche Produkte wie 2,4- und/oder 2,6-Toluylendiisocyanat, m-Phenylendiisocyanat, Xylylendiisocyanat, 4,4'-Biphenylendiisocyanat, 1,4-Tetramethylen-und/oder 1,6-Hexamethylen-diisocyanat, 1,4-Cyclohexylendiisocyanat, 1,5-Tetrahydronaphtalin-diisocyanat, Methylendicyclohexylen-diisocyanat und dergleichen.

Bevorzugte Diolkomponenten der angegebenen Molgewichtsbereiche sind beispielsweise niedermolekulare Polyester aus aliphatischen und/oder aromatischen Dicarbonsäuren wie Adipinsäure und Isophtalsäure und Diolen wie Hexandiol, Neopentylglykol und/oder 1,2-Propylenglykol. Geeignete Polyetherdiole sind beispielsweise entsprechende Polyalkylenglykole, insbesondere Polypropylenglykol, polycyclische Etherdiole und dergleichen.

In den angegebenen Bereichen für die Mengenverhältnisse der Isocyanatverbindungen einerseits und der polyfunktionellen Alkoholkomponenten andererseits entstehen intermediar die isocyanat-terminierten niederen Urethan-Oligomeren. Diese werden mit einer stöchiometrischen untergeordneten Menge an monomeren Acrylat-Komponenten zur Reaktion gebracht, die sich ihrerseits durch das Vorliegen eines aktiven Wasserstoffatoms und damit durch ihre Reaktivität gegenüber der Isocyanatgruppe auszeichnen, vgl. hierzu beispielsweise die Angaben der zitierten US-PS 4,174 307. Die Umsetzung kann dementsprechend beispielsweise im Temperaturbereich bis etwa 95°C und vorzugsweise unter Inertgas bei Zugabe der H-aktiven Vinylverbindungen zu den vorgelegten Urethan-Oligomeren mit ihrem Gehalt an freien Isocyanatgruppen erfolgen.

Wenn auch für diese Umsetzung grundsätzlich alle entsprechenden Vinylverbindungen in Betracht kommen, so werden im Rahmen einer bevorzugten Ausführungsform der Erfindung entsprechende Ester der Acrylsäure und/oder der Methacrylsäure - im folgenden als (Meth)-acrylsäureester bezeichnet - bevorzugt. Substituenten dieser Art zeigen bei ihrer Abreaktion nur geringe, durch Übertragungsreaktionen ausgelöste Vernetzungsneigung, sowie gleichzeitig eine hohe Polymerisationsgeschwindigkeit. Im Rahmen der Strahlungshärtung bedeutet das, daß mit vergleichsweise kurzen Belichtungszeiten in der ersten Härtungsstufe gearbeitet werden kann. Für die partielle Umsetzung der endständigen Isocyanatgruppen am Urethan-Oligomer-Molekül mit den (Meth)-acrylatestern eignen sich insbesondere entsprechende Ester mit einer Hydroxylgruppe in der esterbildenden Alkoholfunktion des (Meth)-acrylatestermoleküls. Ein charakteristisches Beispiel hierfür ist etwa das Hydroxy-ethyl-acrylat bzw.-methacrylat.

Zur Herstellung der mehrfunktionellen Makromeren kann theoretisch an jedem Molekül der intermediär gebildeten Isocyanat-terminierten Urethan-Oligomeren eine Isocyanatgruppe in eine Acrylatgruppe umgewandelt werden. Setzt man dann allerdings die mit entsprechenden stöchiometrischen Mengen der Reakanten erhaltenen Makromere im Rahmen der Erfindung ein, so werden in der ersten Verfahrensstufe der Lichthärtung leicht harte und unzureichend kontaktklebrige Filme gebildet. Tatsächlich enthält ein derartiges Umsetzungsprodukt statistisch nicht unbeträchtliche Anteile an Diacrylaten, die in der Lichthärtungsstufe dann anvernetzte Polymere bilden, weiche auf die Fügeteile aufgebracht schlecht verpressbare Klebstoffilme ausbilden, da keine hinreichende Durchdringung der Molekülstrüktur beim Verpressen mehr möglich ist. Erfindungsgemäß ist es dementsprechend bei der Herstellung der mehrfunktionellen Makromeren und damit bei der Herstellung der neuen Kontaktkleber bevorzugt, weniger als den stöchiometrisch möglichen Betrag von 50 % der insgesamt vorliegenden freien Isocyanatgruppen in (Meth)-acrylatgruppen umzuwandeln. Bevorzugt wird, einen Anteil von nur etwa 15 bis 35 % und vorzugsweise von etwa 20 bis 30 % der im intermediär gebildeten Isocyanat-terminierten Oligo-Urethan-Ein-satzmaterialien in die mono-olefinischen Substituenten umzuwandeln. Durch dieses Vorgehen wird zweierlei erreicht:

Die statistische Bildung der unerwünschten Diacrylat-Urethane wird zurückgedrängt, gleichzeitig bleibt ein entsprechender Anteil an rein Isocyanat-terminierten Urethan-Oligomeren erhalten. Dieser oligomere Diisocyanatanteil wirkt als reaktiver Weichmacher für die Arbeitsschritte der in erster Härtungsstufe ausgebildeten kontaktklebrigen Klebstoffilme und damit zu gut verpressbaren Klebstoffschichten. Gleichzeitig wird die Funktionalität des Klebers für den zweiten Härtüngsschritt durch Einwirkung von Wasser bzw. Luftfeuchte erhöht und dämit die Bindungsfestigkeit der letztlich entstehenden Klebstoffuge erhöht. Ersichtlich liegt hier auch ein Vorteil für die Herstellung der erfindungsgemäßen Klebstoffmischungen. Das Gemisch aus dem unsymetrisch reaktiven Prepolymeren und dem symetrischen Diisocyanat-Weichmacher kann in einer bequemen Eintopfsynthese erhalten werden.

### Weitere rein isocyanat-reaktive Mischungsbestandteile

Je nach der konkreten Konstitution des Urethan-Oligomeren - beispielsweise in Abhängigkeit von der jeweils bestimmt gewählten Konstitution der Diolkomponente - zeigen die ausgehärteten Klebstoffe nach der radikalischen Härtung und der nachfolgenden Wasser-Härtung charakteristische Werte für die Wärmestandfestkeit des voll ausgehärteten Klebstoffs. Liegen diese Werte unerwünscht niedrig, so kann eine Verbesserung durch die Mitverwendung von Isocyanatkomponenten mit höherer Funktionalität als 2 erzielt werden. Geeignet ist in diesem Fall insbesondere die Mitverwendung von dreifunktionellen Isocyanat-terminierten Mischungsbestandteilen, die in an sich bekannter Weise durch Einsatz entsprechender höherwertiger Alkohole bei der Urethanbildungsreaktion zugänglich sind. Der Anteil dieser höherfunktionellen Polyisocyanatverbindungen kann den jeweiligen Anforderungen angepaßt werden, in der Regel werden die wenigstens dreifunktionellen Isocyanatkomponenten die Menge der als reaktiver Weichmacher vorliegenden Diisocyanatkomponenten nicht oder nicht wesentlich überschreiten.

### Olefinisch ungesättigte Reaktiv-Verdünner

Neben den bisher geschilderten Komponenten werden zusätzlich sogenannte Reaktiv-Verdünner eingesetzt, die gegenüber der Stufe der radikalischen Reaktionsauslösung reaktiv sind. Bevorzugt handelt es sich dabei um bei Raumtemperatur fließfähige, vorzugsweise schwer flüchtige und von Isocyanatgruppen freie monofunktionelle Komponenten, wobei auch hier wieder entsprechenden monofunktionellen (Meth)-acrylatverbindungungen besondere Bedeutung zukommen kann. Durch die physikalische Beschaffenheit dieser Reaktiv-Verdünner kann auf die Arbeitsbedingungen zur Applikation der Kontaktklebstoffe auf die zu verklebenden Feststoffoberflächen Einfluß genommen werden. So wird es möglich, die Kontaktkleber bei Temperaturen im Bereich der Raumtemperatur oder bei nur mäßig erhöhten Tempera turen - beispielsweise etwa bis zu einer Temperaturobergrenze von etwa 70°C - als gut fließfähige und/oder pastös verstreichbare Massen verfügbar zu machen und damit dünne Schichten vorbestimmbarer Schichtdicke zuverlässig auszubilden.

Wichtig ist, daß auch diese Reaktiv-Verdünner olefinisch monofunktionelle Reaktanten sind, um die zuvor geschilderten unerwünschten Effekte einer Vernetzung im Rahmen der ersten Lichthärtungsstufe auszuschließen. Bevorzugt sind insbesondere Reaktiv-Verdünner der geschilderten Art, die zur Bildung von Homopolymerisaten mit Glasübergangstemperaturen unterhalb Raumtemperatur befähigt sind, wobei solche Monomeren besonders geeignet sein können, dere in der Homopolymerisation gebildeten Polyermassen Glasübergangstemperaturen deutlich unterhalb 0°C zeigen. (Meth)-acrylatester hinreichend begrenzter Flüchtigkeit, beispielsweise n-Butylacrylat oder Ester, höherer gradkettiger oder verzweigter Alkohole entsprechen diesem Anforderungsprofil.

### Die Mischungsverhältnisse der Klebstoffbestandteile

Bevorzugte Köntaktklebstoffmassen gemäss der Erfindung enthalten die aufgeführten Mischungsbestandteile - bezogen jeweils auf den Gesamtkleber - in den folgenden Mengenverhältnissen:

Mehrfunktionelle Makromerverbindungen: 5 - 90 Gew.-%, vorzugsweise 10 - 60 Gew.-% und insbesondere 20 - 50 Gew.-%

Radikalisch härtbare Reaktiv-Verdünner; 10 - 80 Gew.-% und vorzugsweise 20 - 50 Gew.-%

Von radikalisch härtbaren Substituenten freie Isocyanatverbindungen: 10 - 60 Gew.-% und vorzugweise 20 - 50 Gew.-%. Werden in dieser Mischungskomponente trifunktionelle und/oder höherfunktionelle Isocyanate eingesetzt, so kann deren Anteil beispielsweise bis zu 50 Gew.-%, vorzugsweise bis zu 30 Gew.-% und insbesondere etwa 5 - 20 Gew.-% betragen.

Durch Wahl der geeigneten Mischungskomponenten und ihrer Anteile ist es möglich Stoffmischungen auszubilden, die bei Anwendungstemperatur fließfähig bis pastös verstreichbar sind, dabei aber gleichzeitig von nichtreaktiven Lösungsmitteln und/oder Weichmachern frei sind.

Die Klebstoffmischungen enthalten vorzugsweise weiterhin in an sich bekannter Weise Inhibitoren gegen eine vorzeitige radikalische Polymerisationsauslösung in geringer Menge. Die radikalische Initiierung der ersten Härtungsstufe erfolgt ebenfalls in an sich bekannter Weise. Geeignet sind beispielsweise Redox-Initiatoren, soweit eine hinreichende Aushärtung hier nicht durch Luftzutritt beschränkt oder inhibiert wird.

Geeignet ist für die erste Stufe der Aushärtung wie bereits mehrfach angegeben insbesondere eine Strahlenhärtung bevorzugt eine UV-Aushärtung. Die Klebstoffgemische enthalten dann zweckmäßig in an sich bekannter Weise geringe Mengen an Aktivatoren zur Auslösung dieser Strahlenhärtung, vgl. hierzu wiederum die eingangs zitierte einschlägige druckschriftliche Literatur.

Charakteristische Ausführungsformen für die Herstellung der neuen Kontaktkleber, ihr Einsatz bei der Verklebung von Holz bzw. PVC-Formteilen und die bei der Austestung erhaltenen Ergebnisse sind in den nachfolgenden Beispielen zusammengefaßt.

### Beispiele

In den nachfolgenden Beispielen 1 - 4 wird zunächst jeweils die Herstellung eines mehrfunktionellen Makromeren im Sinne der erfindungsgemäßen Definition geschildert, d.h. die Herstellung typischer Vertreter der Klasse von Urethan-Oligomerverbindungen, die neben einem olefinisch ungesättigten radikalisch reaktiven Substituenten eine feuchtigkeitshärtende Isocyanatgruppe aufweisen.

Das nachfolgende Beispiel 5 schildert die Herstellung einer trifunktionellen Isocyanatverbindung, die als Mischungskomponente in den anschließenden Beispielen 6 - 14 beschriebenen Klebstoffmischungen eingesetzt wird.

Eine weitere Klebstoffmischung ist in Beispiel 15 dargestellt.

Im Anschluß an das Beispiel 15 wird dann die Durchführung von Verklebungen mit den erfindungsgemäßen Klebstoffmischungen beschrieben, wobei in tabellarischer Zusammenfassung die Zugscherfestigkeiten (N/mm) von Verklebungen mit Klebstofformulierungen gemäß Beispielen 6 - 15 zusammengestellt sind.

Im einzelnen gilt:

### Herstellung der Isocyanatgruppen enthaltenden Polyurethanacrylate gemäß Beispielen 1 - 4

### Beispiel 1

321 g Polypropylenglykol (Molekulargewicht 400) werden auf 50°C erhitzt. Dazu werden portionsweise 281 g 4,4'-Diisocyanato-diphenylmethan (MDI, Handelsprodukt "Desmodur 44 M" der Fa. Bayer) gegeben und anschließend das Gemisch für 2,5 h auf 80°C erhitzt, bis der Theoretische NCO-Gehalt von 5,2 % erreicht ist. Anschließend werden 21,6 g 2-Hydroxyethylacrylat zugegeben und das Reaktionsgemisch für weitere 30 min. auf 75°C erwärmt. Der Rest-NCO-Gehalt liegt dann bei 3,82 %. Das Prepolymer kann unter Feuchtigkeitsausschluß gelagert oder direkt in eine Klebstofformulierung eingearbeitet werden.

### Beispiel 2

232 g eines Diols auf Basis Polytetrahydrofuran (Handelsprodukt "PolyTHF 250" der Fa. BASF) werden auf 60°C erwärmt und 131 g hydriertes MDI (Handelsprodukt "Desmodur W" der Fa. Bayer) zugegeben. Es wird für 4 h auf 100°C erhitzt, bis der NCO-Gehalt auf 0 % gesunken ist. Anschließend werden bei 80°C 174 g 2,4-Toluendiisocyanat (TDI, Handelsprodukt "Desmodur T 100" der Fa. Bayer) zugegeben und bis zum Erreichen des Theoretischen NCO-Gehaltes von 6,34 % bei dieser Temperatur gehalten. Dann werden 0,056 g Hydrochinonmonomethylether und 28,7 g 2-Hydroxyethylacrylat zugegeben und 45 min. auf 80°C erwärmt. Das so erhaltene Prepolymer weist einen NCO-Gehalt von 4,6 % auf.

### Beispiel 3

Analog Beispiel 1 wird ein Prepolymer aus 400 g Polyesterdiol (Handelsprodukt "PE 216" der Anmelderin), 187 g MDI und 14,4 g 2-Hydroxyethylacrylat hergestellt. Das Prepolymer weist einen NCO-Gehalt von 2,6 % auf.

### Beispiel 4

Aus 232 g des Handelsproduktes "PolyTHF 250", 125 g MDI, 174 g TDI und 28,7 g 2-Hydroxyethylacrylat wird analog Belspiel 2 ein Prepolymer mit einem NCO-Gehalt von 5,6 % hergestellt.

### Beispiel 5

### Herstellung einer trifunktionellen Isocyanatverbindung

270 g eines Oligo-Caprolactontriols (Handelsprodukt "CAPA 305" der Fa. DOW) werden auf 50°C erwärmt. Dazu werden 261 g TDI so zugetropft, daß die Reaktionstemperatur 80°C nicht überschreitet. Das Reaktionsgemisch wird weitere 30 min. auf 80°C erhitzt, bis der theoretische NCO-Gehalt von 11,9 % erreicht ist.

### Beispel 6

### Herstellung einer Klebstoffmischung

34 g 3-Methoxybutylacrylat werden auf 50°C erwärmt. Dazu werden unter Lichtausschluß 1 g eines Photoinitiators (Handelsprodukt "Irgacure 651" der Fa. Ciba-Ceigy), 60 g Prepolymer aus Beispiel 2 und 5 g trifunktionelle Isocyanatverbindung nach Beispiel 5 gegeben und bis zur Bildung einer homogenen Lösung gerührt. Zwecks besserer Verarbeitbarkeit werden Prepolymer und Triisocyanat ebenfalls auf 50°C erwärmt. Die so erhaltene Klebstoffmischung wird unter Licht und Feuchtigkeitsausschluß aufbewahrt und ist in dieser Form bei Raumtemperatur lagerstabil.

### Beispiele 7 - 14

Analog Beispiel 6 werden die im nachfolgenden tabellarisch zusammengefaßten weiteren Klebstoffmischungen hergestellt. Dabei ist in der letzten Spalte das jeweils eingesetzte Acrylat über die Angabe des Alkohol restes im eingesetzten Acrylat definiert. Die Zahlen aus den nachgestellten Klammern geben sowohl bei den Prepolymeren wie bei den Acrylaten jeweils die in der Rahmenrezeptur des Beispiels 6 eingesetzte Menge der betroffenen Komponenten an.

| Beispiel | Prepolymer nach Beispiel (Menge in g) | Acrylat (Menge in g) |
|---|---|---|
| 7 | 4 (70) | 2-Ethylhexyl-(29) |
| 8 | 4 (75) | 3-Methoxybutyl-(24) |
| 9 | 4 (62,5) | 2-Phenoxyethyl-(36,5) |
| 10 | 1 (70) | 3-Methoxybutyl-(29) |
| 11 | 1 (70) | n-Butyl-(29) |
| 12 | 1 (70) | Benzyl-(29) |
| 13 | 1 (70) | 2-Methoxypropyl-(29) |
| 14 | 3 (70) | 2-Phenoxyethyl-(29) |

### Beispiel 15

Es wird eine Klebstoffmischung analog Beispiel 8 hergestellt, wobei jedoch als Photoinitiator das Handelsprodukt "Lucirin TPO" der Fa. BASF in einer Konzentration von 1 Gew.-% verwendet wird.

### Durchführung von Verklebungen

Die gemäß Beispiel 6 erhaltene Klebstoffmischung wird mittels einer Rakel in einer Schichtdicke von 0,1 mm auf Buchensperrholz-Prüfkörper mit den Maßen 80x50x4 mm aufgetragen. Dann wird für 5 min auf einer 300W-Photolampe (Osram-Vitalux) bestrahlt und so eine kontaktklebrige Schicht erzeugt. Die beschichteten Teile werden mit einer überlappenden Fläche von 1000 mm innerhalb von 60 min. gefügt und mit einem Druck von 0,5 N/mm verpresst. Die Bestrahlung ist auch mit anderen Lichtquellen möglich, zum Beispiel Hg-Hochdruckbrennern (Ultrajet 100 der Fa. Köhler). Die Belichtungszeiten sind den Lichtquellen anzupassen. Die Messung der Zugscherfestigkeiten erfolgen mit einer Abzugsgeschwindigkeit von 100 mm/min. mit einer Prüfmaschine der Fa. Zwick (Typ 144501/00) nach 2 min. (Anfangsfestigkeit) und 7 Tagen (Endfestigkeit).

| Zugscherfestigkeiten (N/mm) von Verklebungen mit nach Beispielen 6 - 15 hergestellten Klebstofformulierungen | | |
|---|---|---|
| Beispiel Nr. | Anfangsfestigkeit | Endfestigkeit |
| 6 | 1,9 | 7,2 |
| 7 | 0,7 | 8,1 |
| 8 | 2,1 | 8,2 |
| 9 | 0,8 | 8,9 |
| 10 | 1,2 | 6,4 |
| 11 | 1,3 | 7,2 |
| 12 | 0,9 | 7,8 |
| 13 | 2,0 | 8,9 |
| 14 | 0,2 | 6,3 |
| 15 | 1,3 | 4,3 |

## Patentansprüche

1. Reaktiv-Kontaktkleber auf Basis stufenweise nach unterschiedlichen Reaktionsmechanismen härtbarer mehrfunktioneller Makro-Monomerverbindungen (mehrfunktionelle Makromere), die substituierte Urethan-Oligomerverbindungen enthalten, die neben olefinisch ungesättigten radikalisch reaktiven Substituenten feuchtigkeitshärtende Isocyanatgruppen aufweisen, dadurch gekennzeichnet, daß er noch einen radikalisch härtbaren Verdünner sowie eine feuchtigkeitsreaktive Isocyanatverbindung mit Weichmacher- und/oder Vernetzungsfunktion enthält.

2. Kontaktkleber nach Anspruch 1, dadurch gekennzeichnet, daß die mehrfunktionellen Makromeren strahlenhärtbare olefinisch ungesättigte Substituenten an Urethan-Oligomeren mit wenigstens überwiegend linearer Oligomer-Grundstruktur aufweisen, wobei bevorzugt die freie Isocyanatfunktion im Molekülaufbau wenigstens anteilsweise, insbesondere überwiegend räumlich getrennt von der strahlenhärtbaren Funktion angeordnet ist.

3. Kontaktkleber nach Ansprüchen 1 und 2, dadurch gekennzeichnet, daß der wenigstens überwiegende Anteil der Makromerverbindungen 1-fach olefinisch und 1- und/oder mehrfach mit Isocyanat substituierte Urethan-Oligomerverbindungen sind, deren olefinische und Isocyanat-Substitution bevorzugt in alpha, omega-Stellung vorliegen.

4. Kontaktkleber nach Ansprüchen 1 bis 3, dadurch gekennzeichnet, daß sich die mehrfunktionellen Makromeren zu einem wenigstens substantiellen Anteil von Isocyanat-terminierten Urethan-Oligomeren auf Diol/Diisocyanat-Basis ableiten, deren eine Isocyanatgruppe mittels einer radikalisch polymerisierbaren, rekativen Wasserstoff enthaltenden Monomerverbindung - insbesondere einer entsprechenden (Meth)-acrylatverbindung - umgesetzt ist.

5. Kontaktkleber nach Ansprüchen 1 bis 4, dadurch gekennzeichnet, daß die Urethan-Oligomer-Grundkörper bei einem Molverhältnis von Diol:Diisocyanat im Bereich von 1 : 1,2 bis 2, vorzugsweise 1 : 1,4 bis 1,8, maximale Molgewichte vo etwa 35.000, vorzugsweise von höchstens etwa 20.000 und insbesondere im Bereich 1.000 bis 3.000 aufweisen und sich dabei in der Diolkomponente bevorzugt von entsprechenden Verbindungen mit Molgewichten von wenigstens etwa 100 bis maximal etwa 6.000, insbesondere im Bereich bis etwa 1.000 und zweckmäßigerweise mit Molgewichten von etwa 230 bis 700 leiten.

6. Kontaktkleber nach Ansprüchen 1 bis 5, dadurch gekennzeichnet, daß die mehrfunktionellen Makromeren beziehungsweise ihre Abmischungen mit den reaktiven Mischungskomponenten bei Verarbeitungstemperatur Kontaktklebrigkeit aufweisen, die soweit erhalten bleibt, daß druckhaftende Materialfügungen ermöglicht sind.

7. Kontaktkleber nach Anspruch 6, dadurch gekennzeichnet, daß die Kontaktklebrigkeit auch nach der Abreaktion der olefinisch ungesättigten Molekülanteile aus der ersten Härtungsstufe erhalten bleibt.

8. Kontaktkleber nach Ansprüchen 1 bis 7, dadurch gekennzeichnet, daß als feuchtigkeitsreaktive Mischungskomponente Di-Isocyanate, ggfs. auch in Abmischung mit höheren Polyisocyanatverbindungen, insbesondere 3-funktionellen Isocyanatverbindungen, vorliegen.

9. Kontaktkleber nach Ansprüchen 1 bis 8, dadurch gekennzeichnet, daß wenigstens der Hauptanteil der als Mischungskomponente vorliegenden Polyisocyanatverbindungen im Überschuß vorliegende Di-Isocyanate auf Urethan-Oligomerbasis aus der Herstellung der mehrfunktionellen Makromeren sind.

10. Kontaktkleber nach Ansprüchen 1 bis 9, dadurch gekennzeichnet, daß als Reaktivverdünner bei Raumtemperatur fließfähige, vorzugsweise schwer flüchtige und von Isocyanatgruppen freie monofunktionelle (Meth)-acrylatverbindungen vorliegen.

11. Kontaktkleber nach Ansprüchen 1 bis 10, dadurch gekennzeichnet, daß die Mischungsbestandteile des Klebers bezüglich ihrer radikalisch reaktiven Funktionalität im wesentlichen und bevorzugt praktisch vollständig monofunktionell ausgebildet sind, während sie bezüglich ihrer feuchtigkeitsreaktiven Isocyanat-Funktionalität monofunktionell und/oder mehrfunktionell ausgebildet sein können, wobei hier mono- und mehrfunktionelle Stoffgemische, insbesondere 1- und 2-funktionell mit Isocyanat substituierte Mehrkomponentengemische bevorzugt sind.

12. Kontaktkleber nach Ansprüchen 1 bis 11, dadurch gekennzeichnet, daß sie die einzelnen Mischungsbestandteile - bezogen jeweils auf den Gesamtkleber - in den folgenden Mengenverhältnissen enthalten:
Mehrfunktionelle Makromerverbindungen: 5 bis 90 Gew.-%, vorzugsweise 10 bis 60 Gew.-% und inbesondere 20 bis 50 Gew.-%;
Radikalisch härtbare Reaktivverdünner: 10 bis 80 Gew.-%, vorzugsweise 20 bis 50 Gew.-%;
Von radikalisch härtbaren Substituenten freie Isocyanatverbindungen: 10 bis 60 Gew.-%, vorzugsweise 20 bis 50 Gew.-%.

13. Kontaktkleber nach Ansprüchen 1 bis 12, dadurch gekennzeichnet, daß sie bei Anwendungstemperatur fließfähig bis pastös verstreichbar, dabei aber vorzugsweise von nicht-reaktiven Lösungsmitteln und/oder Weichmachern frei sind.

14. Kontaktkleber nach Ansprüchen 1 bis 13, dadurch gekennzeichnet, daß sie Inhibitoren gegen eine vorzeitige radikalische Polymerisation und Aktivatoren zur Auslösung der Strahlenhärtung enthalten und insbesondere UV-härtbar ausgestaltet sind.

15. Verfahren zur Herstellung der Reaktiv-Kontaktkleber nach Ansprüchen 1 bis 14, dadurch gekennzeichnet, daß man die im Überschuß vorgelegten Isocyanat-terminierten Urethan-Oligomerverbindungen mit radikalisch härtbaren und mittels aktivem Wasserstoff Isocyanat-reaktiven Monomerverbindungen im stöchiometrischen Unterschuß versetzt und abreagieren läßt und gewünschtenfalls die weiteren reaktiven Mischungskomponenten zumischt.

16. Verfahren zur Herstellung der Reaktiv-Kontaktkleber nach Anspruch 15, dadurch gekennzeichnet, daß man einen Anteil von etwa 15 bis 35 %, vorzugsweise etwa 20 bis 30 %, der im Isocyanat-terminierten Oligourethan-Einsatzmaterial vorliegenden Isocyanatgruppen in mono-olefinische Substituenten umwandelt.

17. Verfahren zur Herstellung der Reaktiv-Kontaktkleber nach Ansprüchen 15 und 16, dadurch gekennzeichnet, daß man als Reaktiv-Verdünner olefinisch monofunktionelle Reaktanten einsetzt, die zur Bildung von Homopolymerisaten mit Glasübergangstemperaturen unterhalb Raumtemperatur, vorzugsweise unterhalb 0°C, befähigt sind, wobei entsprechende (Meth)-acrylatester bevorzugt sein können.

18. Verwendung der Reaktiv-Kontaktkleber nach Ansprüchen 1 bis 14 zur Verklebung von Holz und/oder Kunststoffteilen, insbesondere bei Verarbeitungstemperaturen im Bereich bis etwa 70°C, vorzugsweise im Bereich der Raumtemperatur.

19. Ausführungsform nach Anspruch 18, dadurch gekennzeichnet, daß man die zu fügenden Formteile mit dem Kontaktkleber beschichtet, die vorzugsweise dünnen Kleberschichten mittels radikalischer Reaktionsauslösung, inbesondere durch Einwirkung von UV-Strahlung einer ersten Härtungsstufe unterwirft, nachfolgend die miteinander zu verklebenden Flächen - zweckmäßig unter Druck - fügt und den Kleber zweckmäßigerweise unter Einwirkung der Luftfeuchte aushärten läßt.

## Claims

1. Reactive contact adhesives based on polyfunctional macromonomer compounds (polyfunctional macromers) which cure in stages by different reaction mechanisms and which contain substituted urethane oligomer compounds bearing moisture-curing isocyanate groups in addition to olefinically unsaturated radically reactive substituents, characterized in that they also contain a radical-curable diluent and a moisture-reactive isocyanate compound performing a plasticizing and/or crosslinking function.

2. Contact adhesives as claimed in claim 1, characterized in that the polyfunctional macromers contain radiation-curable olefinically unsaturated substituents on urethane oligomers having an at least predominantly linear basic oligomer structure, the free isocyanate function preferably being arranged at least partly and, in particular, predominantly spatially separate from the radiation-curable function in the molecular structure.

3. Contact adhesives as claimed in claims 1 and 2, characterized in that the macromer compounds are at least predominantly monoolefinically substituted and mono- and/or poly-isocyanate-substituted urethane oligomer compounds of which the olefinic and isocyanate substitutions are preferably in the alpha,omega-position.

4. Contact adhesives as claimed in claims 1 to 3, characterized in that the polyfunctional macromers are at least substantially derived from isocyanate-terminated diol/diisocyanate-based urethane oligomers of which one isocyanate group is reacted with a radical-polymerizable monomer compound containing reactive hydrogen, more particularly a corresponding (meth)acrylate compound.

5. Contact adhesives as claimed in claims 1 to 4, characterized in that, for a molar ratio of diol to diisocyanate of 1:1.2 to 2 and preferably 1:1.4 to 1.8, the basic urethane oligomers have maximum molecular weights of approximately 35,000, preferably at most about 20,000 and, more preferably, in the range from 1,000 to 3,000, the diol component preferably being derived from corresponding compounds having molecular weights of at least about 100 to at most about 6,000, preferably up to about 1,000 and more preferably in the range from about 230 to 700.

6. Contact adhesives as claimed in claims 1 to 5, characterized in that the polyfunctional macromers or their mixtures with the reactive mixture components have contact tackiness at the processing temperature and retain their contact tackiness to such an extent that the pressure-sensitive bonding of materials is possible.

7. Contact adhesives as claimed in claim 6, characterized in that contact tackiness is retained even after the olefinically unsaturated molecular elements from the first curing stage have reacted off.

8. Contact adhesives as claimed in claims 1 to 7, characterized in that diisocyanates, optionally in admixture with higher polyisocyanate compounds, more particularly trifunctional isocyanate compounds, are present as the moisture-reactive mixture components.

9. Contact adhesives as claimed in claims 1 to 8, characterized in that at least most of the polyisocyanate compounds present as a component of the mixture are urethane oligomer-based diisocyanates present in excess from the production of the polyfunctional macromers.

10. Contact adhesives as claimed in claims 1 to 9, characterized in that monofunctional (meth)acrylate compounds free from isocyanate groups, which are liquid at room temperature and preferably of low volatility, are present as the reactive diluents.

11. Contact adhesives as claimed in claims 1 to 10, characterized in that, in regard to their radical-reactive functionality, the components of the adhesive mixture are substantially and, preferably, almost completely monofunctional whereas, in regard to their moisture-reactive isocyanate functionality, they may be monofunctional and/or polyfunctional, monofunctional and polyfunctional mixtures, more particularly mono- and difunctionally isocyanate-substituted multicomponent mixtures being preferred.

12. Contact adhesives as claimed in claims 1 to 11, characterized in that they contain the individual components of the mixture in the following quantities, based on the adhesive as a whole:
multifunctional macromer compounds: 5 to 90% by weight, preferably 10 to 60% by weight and more preferably 20 to 50% by weight
radical-curable reactive diluent: 10 to 80% by weight and preferably 20 to 50% by weight
isocyanate compounds free from radical-curable substituents: 10 to 60% by weight and preferably 20 to 50% by weight.

13. Contact adhesives as claimed in claims 1 to 12, characterized in that they are liquid to paste-like and spreadable at the application temperature, but are preferably free from non-reactive solvents and/or plasticizers.

14. Contact adhesives as claimed in claims 1 to 13, characterized in that they contain inhibitors against premature radical polymerization and activators to initiate radiation curing and, in particular, are designed for UV curing.

15. A process for the production of the reactive contact adhesives claimed in claims 1 to 4, characterized in that radical-curable monomer compounds reactive to isocyanates through active hydrogen are added in less than the stoichiometrically necessary quantity to the isocyanate-terminated urethane oligomer compounds initially introduced in excess and allowed to react off and, if desired, the other reactive mixture components are subsequently introduced.

16. A process for the production of reactive contact adhesives as claimed in claim 15, characterized in that approximately 15 to 35% and preferably 20 to 30% of the isocyanate groups present in the isocyanate-terminated oligourethane starting material are converted into monoolefinic substituents.

17. A process for the production of reactive contact adhesives as claimed in claims 15 and 16, characterized in that olefinically monofunctional reactants capable of forming homopolymers having glass transition temperatures below room temperature and preferably below 0°C are used as the reactive diluents, corresponding (meth)acrylates being preferred.

18. The use of the reactive contact adhesives claimed in claims 1 to 14 for bonding wood and/or plastic parts, more particularly at processing temperatures of up to about 70°C and preferably in the region of room temperature.

19. The use claimed in claim 18, characterized in that the parts to be joined are coated with the contact adhesive, the preferably thin adhesive layers are subjected to a first curing stage by radical reaction initiation, more particularly by exposure to UV light, after which the surfaces to be bonded are fitted together, preferably under pressure, and the adhesive is left to cure, preferably under the effect of atmospheric moisture.

## Revendications

1. Colles de contact réactives à base de composés macro-monomères plurifonctionnels durcissables par étapes selon des mécanismes réactionnels différents (macromères plurifonctionnels), qui contiennent des composés oligomères d'uréthane substitués, qui comportent à côté de substituants réactifs radicalement non saturés oléfiniquement des groupes isocyanates durcissables à l'humidité, caractérisées en de qu'elles contiennent encore un diluant durcissable radicalaire ainsi qu'un composé d'isocyanate réactif à l'humidité avec une fonction d'assouplissement et/ou une fonction de réticulation.

2. Colles de contact selon la revendication 1, caractérisées en ce que les macromères multifonctionnels comportent des substituants ou oligomères d'uréthane, durcissables par rayonnement oléfiniquement insaturés avec en moins une structure de base d'oligomère principalement linéaire, tandis que de préférence la fonction isocyanate libre est disposée dans la structure moléculaire au moins partiellement, en particulier principalement séparés dans l'espace de la fonction durcissable par des rayons.

3. Colles de contact selon les revendications 1 et 2, caractérisées en ce que la proportion au moins principale des composés macromères sont des composés oligomères d'uréthane substitués 1 fois oléfiniquement et 1 et/ou plusieurs fois avec de l'isocyanate, dont la substitution oléfinique et celle d'isocyanate sont présentes de préférence en positon alpha, oméga.

4. Colles de contact selon les revendications 1 à 3, caractérisées en ce que les monomères multifonctionnels découlent pour une proportion au moins substantielle d'oligomères d'uréthane terminés par un isocyanate à base de diol/diisocyanate, dont un groupe isocyanate est transformé au moyen d'un composé monomère contenant de l'hydrogène réactif, polymérisable radicalement, en particulier un composé (méth)-acrylate correspondant.

5. Colles de contact selon les revendications 1 à 4, caractérisées en ce que les corps de base oligomères d'uréthane comportent pour un rapport molaire de diol : diisocyanate dans la zone de 1:1,2 à 2, de préférence de 1:1,4 à 1,8 des poids molaires maximaux d'environ 35.000, de préférence d'au maximum 20.000 et en particulier dans la zone de 1000 à 3000 et s'inspirent en outre dans le composant diol de préférence de composés correspondants avec des poids molaires d'au moins environ 100 jusqu'à au maximum environ 6000, en particulier dans la zone jusqu'à environ 1000 et normalement avec des poids molaires d'environ 230 à 700.

6. Colles de contact selon les revendications 1 à 5, caractérisées en ce que les macromères plurifonctionnels ou leurs mélanges avec les composants de mélange réactifs ont à la température de traitement une adhésivité de contact, qui reste maintenue, pour autant que les assemblages de matériaux pesants sont rendus possibles.

7. Colles de contact selon la revendication 6, caractérisées en ce que l'adhésivité de contact reste maintenue aussi après la fin de réaction des parties de molécule non saturées oléfiniquement, à partir de la première étape de durcissement.

8. Colles de contact selon les revendications 1 à 7, caractérisées en ce que comme composant de mélange réactif à l'humidité sont présents des diisocyanates, éventuellement aussi en mélange avec des composés de polyisocyanate supérieur, en particulier des composés d'isocyanate trifonctionnels.

9. Colles de contact selon les revendications 1 à 8, caractérisées en ce qu'au moins la partie principale des composés de polyisocyanate présents comme composant du mélange sont des diisocyanates à base d'oligomères d'uréthane présents en excès à partir de la préparation des macromères plurifonctionnels.

10. Colles de contact selon les revendications 1 à 9, caractérisées en ce que comme diluants réactifs à température ambiante sont présents des composés de (méth)acrylates coulants, de préférence difficilement volatils et monofonctionnels exempts de groupes isocyanate.

11. Colles de contact selon les revendications 1 à 10, caractérisées en ce que les composants du mélange de la colle en ce qui concerne leur fonctionnalité réactive radicalaire sont réalisés essentiellement et de préférence pratiquement complètement monofonctionnels, tandis qu'en ce qui concerne leur fonctionnalité d'isocyanate réactive à l'humidité ils peuvent être réalisés monofonctionnels et/ou plurifonctionnels ; des mélanges de matière mono- et multifonctionnels, en particulier des mélanges de plusieurs composants substitués 1 et 2- fonctionnellement par de l'isocyanate sont préférés.

12. Colles de contact selon les revendications 1 à 11, caractérisées en ce qu'elles contiennent les composants de mélange séparés, par rapport respectivement à la colle totale, dans les proportions suivante:
- composés macromères multifonctionnels : 9 à 90 % en poids, de préférence 10 à 60 % en poids et en particulier 20 à 50 % en poids ;
- diluants réactifs durcissables radicalairement : 10 à 80 % en poids, de préférence 20 à 50 % en poids ;
- composés d'isocyanate exempts de substituants durcissables radicalaire : 10 à 60 % en poids, de préférence 20 à 50 % en poids.

13. Colles de contact selon les revendications 1 à 12, caractérisées en ce qu'elles se répandent, à température d'utilisation, coulantes à pâteuses, mais en outre de préférence exemptes de solvants non réactifs et/ou d'assouplissants.

14. Colles de contact selon les revendications 1 à 13, caractérisées en ce qu'elles contiennent des inhibiteurs contre une polymérisation radicalaire prématurée et des activateurs pour le déclenchement du durcissement par rayonnement et sont formées en particulier par durcissement aux U.V.

15. Procédé de préparation des colles de contact réactives selon les revendications 1 à 14, caractérisé en ce qu'on mélange les composés oligomères d'uréthane préparés en excès terminés par un isocyanate avec des composés monomères durcissables radicalement et réactifs en isocyanate au moyen d'hydrogène actif en trame stoechiométrique et on laisse réagir et si on le souhaite on mélange avec les autres composants de mélange réactifs.

16. Procédé de préparation des colles de contact réactives selon la revendication 15, caractérisé en ce qu'on transforme un pourcentage d'environ 15 à 35 % de préférence d'environ 20 à 30 % des groupes isocyanate présents dans le matériau de mise en oeuvre d'oligo-uréthane terminé par un isocyanate en substituants mono-oléfiniques.

17. Procédé de préparation des colles de contact réactives selon les revendications 15 et 16, caractérisé en ce qu'on met en oeuvre comme diluant réactif des réactants monofonctionnels oléfiniquement, qui sont aptes à la formation d'homopolymérisats avec des températures de transition du verre en dessous de la température ambiante, de préférence en dessous de 0°C, les esters de (méth)acrylates correspondants pouvant être préférés.

18. Utilisation des colles de contact réactives selon les revendications 1 à 14 pour le collage de bois et/ou de pièces en matière plastique, en particulier à des températures de traitement dans la zone jusqu'à environ 70°C, de préférence dans la zone de la température ambiante.

19. Forme de réalisation selon la revendication 18, caractérisée en ce qu'on enduit les pièces de forme à assembler avec la colle de contact, on soumet les couches de colle de préférence minces au moyen d'un déclenchement réactionnel radicalaire, en particulier par effet de rayonnement U.V à une première étape de durcissement, ensuite on assemble les surfaces à coller ensemble, normalement sous pression, et on fait durcir la colle de manière appropriée sous l'influence de l'humidité de l'air.
